# EUROPÄISCHE PATENTSCHRIFT

(11) **EP 2 207 980 B1**
(45) Veröffentlichungstag und Bekanntmachung des Hinweises auf die Patenterteilung: **23.11.2011**
(21) Anmeldenummer: 08749845.7
(22) Anmeldetag: 29.04.2008
(51) Int. Cl.: F16D 65/097

(54) **BREMSBELAG FÜR EINE TEILBELAG-SCHEIBENBREMSE**
BRAKE LINING FOR A SPOT-TYPE DISK BRAKE
GARNITURE DE FREIN À DISQUE À GARNITURE PARTIELLE

(30) Priorität: 09.10.2007 DE 102007048489; 08.03.2008 DE 102008013268
(43) Veröffentlichungstag der Anmeldung: 21.07.2010
(73) Patentinhaber: Continental Teves AG & Co. OHG, 60488 Frankfurt (DE); Continental Engineering Services GmbH, 60489 Frankfurt am Main (DE)
(72) Erfinder: KLIMT, Anja, 60488 Frankfurt/M (DE); WÜRZ, Matthias, 61440 Oberursel (DE); PIEHLER, Christian, 60488 Frankfurt/M (DE)
(86) Internationale Anmeldenummer: PCT/EP2008/055241
(87) Internationale Veröffentlichungsnummer: WO 2009/049930

(56) Entgegenhaltungen:
- DE-A1- 19 602 037
- DE-A1-102006 052 178
- GB-A- 2 222 646
- JP-A- 3 113 135
- US-A- 5 934 417

## Beschreibung

Die Erfindung betrifft einen Bremsbelag für eine Teilbelag-Scheibenbremse mit einer Rückenplatte,
wobei an einer Vorderseite der Rückenplatte ein Reibbelag fest angeordnet ist, und an einer Rückseite eine Dämpfungsplatte vorgesehen ist, wobei sich an einen Rumpfbereich der Rückenplatte mindestens ein hakenförmiges Führungsende in Umfangsrichtung anschließt, welches eine Erhebung aufweist, so dass eine Bauteilstärke des Führungsendes gegenüber einer Bauteilstärke des Rumpfbereichs erhöht ist,
und wobei an dem Führungsende mindestens eine Anlagefläche zur tangentialen Anlage in Umfangsrichtung vorhanden ist, und an dem eine Abstützfläche zur radialen Abstützung in einer Radialrichtung vorgesehen ist, und wobei die Dämpfungsplatte mindestens eine umgebogene Lasche aufweist, welche in einem Laschenbereich der Rückenplatte an der radialen Abstützfläche anliegt.

Bei einer solchen Scheibenbremse umfasst ein Bremssattel eine axial drehbare Bremsscheibe, wobei im Bremssattel mindestens ein Paar Bremsbeläge axial verschiebbar angeordnet sind. Die Bremsscheibe ist von den Bremsbelägen beaufschlagbar, wobei die durch die Bremsung entstehenden Umfangs- und Radialkräfte über die Bremsbeläge in den Bremssattel abgeleitet werden, da die Bremsbeläge in Umfangsrichtung mittels Anlageflächen und in Radialrichtung über Abstützflächen im Bremssattel gelagert sind.

Aus der DE 196 02 037 A1 ist ein Bremsbelag mit einer Dämpfungsplatte bekannt, wobei zwischen einem Halter des Bremssattels und dem Bremsbelag eine Lasche in L- oder U-Form zur Geräuschdämpfung angebracht ist. Dadurch ist die Anbindung der Lasche an die Dämpfungsplatte relativ weich und flexibel ausgelegt, und damit empfindlich für Schwingungsbewegungen. Bei dieser Konstruktion wird beim Aufbringen von Bremsdruck im Bremssattel der Bremsbelag samt Dämpfungsplatte komprimiert und axial verschoben. Da die Lasche nicht fest an dem Bremsbelag aufliegt, sondern einen spielbehafteten und undefinierten Kontakt zur Rückenplatte hat, besteht die Möglichkeit, dass sich in der Kompressionsphase zwischen der Lasche und dem Halter einen Stick-Slip-Effekt mit Bewegungen im Mikrometerbereich aufbaut. Das heißt, die Lasche vollführt einen Bewegungswechsel zwischen Haften und Rutschen. Dieser Effekt kann sich in den Halter und die angebauten Komponenten übertragen und damit das System zum Schwingen anregen. Auch eine Befettung der Gleitflächen bietet keine dauerhafte Lösung für dieses Schwingungsphänomen, da eine Befettung im normalen Fahrbetrieb binnen weniger tausend Kilometer ausgewaschen wird. Dieses bekannte Konstruktionskonzept ist jedoch nicht auf Bremsbeläge mit Erhebung am Führungsende anwendbar. Bremsbeläge mit Aufdickung der Rückenplatte kommen jedoch durch die Tendenz zu immer schwereren Fahrzeugen sowie durch Bestrebungen zur Gewichtsreduzierung der Fahrzeuge aufgrund der Reduzierung der CO₂-Emission vermehrt zum Einsatz.

Aus der DE 10 2006 052 178 A1 ist daher ein gattungsgemäßer Bremsbelag mit einer Dämpfungsplatte und aufgedickten Führungsenden bekannt, wobei an der Dämpfungsplatte mindestens ein tangentiales Bördelteil angeordnet ist, welches eine tangentiale Seitenfläche der Rückenplatte umgreift und das in die Lasche übergeht. Das tangentiale Bördelteil umgeht mit anderen Worten den Bereich der Erhebung der Rückenplatte. Diese Dämpfungsplatte hat sich in Hinblick auf die Herstellung, das Handling sowie die Festigkeit als nachteilig erwiesen.

Es ist eine Aufgabe der Erfindung einen Bremsbelag mit einer Dämpfungsplatte und aufgedickten Führungsenden anzugeben, wobei die Nachteile des Stands der Technik vermieden werden. Zudem gilt es, ein Verfahren zur Herstellung einer Dämpfungsplatte für einen Bremsbelag anzugeben.

Die Aufgabe wird erfindungsgemäß dadurch gelöst, dass die Dämpfungsplatte im Rumpfbereich der Rückenplatte relativ zum Laschenbereich axial rückversetzt vorgesehen ist. Hierdurch kann das aus der DE 196 02 037 A1 bekannte Konstruktionskonzept einer Dämpfungsplatte mit einer angeformten L- oder U-Lasche auch auf Bremsbeläge mit Erhebung am Führungsende angewendet werden.

Eine für die Festigkeit der Dämpfungsplatte besonders optimierte Form ergibt sich vorzugsweise dadurch, dass sich an einen Rumpfbereich der Dämpfungsplatte ein Biegebereich anschließt, welcher in einen Laschenbereich übergeht.

Gemäß einer vorteilhaften Ausführungsform der Erfindung liegt der Laschenbereich der Dämpfungsplatte zumindest teilweise an einer zur Rückenplatte parallelen Fläche der Erhebung an, wodurch eine Unterdrückung geräuschbildender Schwingungen erreicht wird.

Vorzugsweise ist der Biegebereich nach einem Biegevorgang der Dämpfungsplatte als eine in Bezug auf den Rumpfbereich und den Laschenbereich schräge Fläche ausgebildet, wodurch die Festigkeit der Dämpfungsplatte weiter verbessert werden kann.

Beim Handling störende Ecken können dadurch vermieden werden, dass der Laschenbereich gemäß einer vorteilhaften Weiterbildung der Erfindung an einer der Lasche gegenüberliegenden Fläche abgeschrägt vorgesehen ist.

Eine feste und steife Anbindung der Dämpfungsplatte kann erreicht werden, indem ein Teilbereich der Lasche an der Vorderseite der Rückenplatte im Laschenbereich unter Vorspannung anliegt. Es werden Mikrobewegungen der Bauteile vermieden, welche störende Geräusche verursachen können.

Die Aufgabe wird weiter durch ein Verfahren zur Herstellung einer Dämpfungsplatte für einen Bremsbelag nach Anspruch 1 gelöst, wobei der Bremsbelag eine Rückenplatte und einen Reibbelag umfasst, welcher an einer Vorderseite der Rückenplatte angeordnet ist, wobei sich an einen Rumpfbereich der Rückenplatte mindestens ein hakenförmiges Führungsende in Umfangsrichtung anschließt, welches eine Erhebung aufweist, so dass eine Bauteilstärke des Führungsendes gegenüber einer Bauteilstärke des Rumpfbereichs erhöht ist, und wobei an der Dämpfungsplatte eine Lasche einstückig ausgebildet ist, welches durch die Schritte aufweist: Ausstanzen eines ungebogenen Rohschnitts der Dämpfungsplatte aus einem ebenen Blech, Biegen eines Biegebereiches, welcher sich an einen Rumpfbereich anschließt, so dass die Dämpfungsplatte in dem Rumpfbereich relativ zu einem Laschenbereich, welcher sich an den Biegebereich anschließt, axial rückversetzt ist und Umbiegen der Lasche, so dass die umgebogene Lasche an einer radialen Abstützfläche des Führungsendes anlegbar ist.

Vorzugsweise wird ein Teilbereich der Lasche umgebogen, so dass dieser (der Teilbereich) an der Vorderseite der Rückenplatte im Laschenbereich unter Vorspannung anlegbar ist.

Weitere Einzelheiten und Vorteile der Erfindung gehen aus den Zeichnungen anhand der Beschreibung eines Ausführungsbeispiels hervor.

In den Zeichnungen zeigt:
- Fig. 1: ein Führungssystem einer Scheibenbremse mit einem Halter und einen erfindungsgemäßen Bremsbelag;
- Fig. 2: eine perspektivische Ansicht auf eine Rückseite des Bremsbelags mit Dämpfungsplatte;
- Fig. 3: einen ungebogenen Rohschnitt der Dämpfungsplatte aus Fig. 1 und 2;
- Fig. 4: eine perspektivische Ansicht der Dämpfungsplatte nach einem Biegevorgang und
- Fig. 5: eine Seitenansicht der Dämpfungsplatte gemäß Fig. 3 und 4 nach dem Biegen.

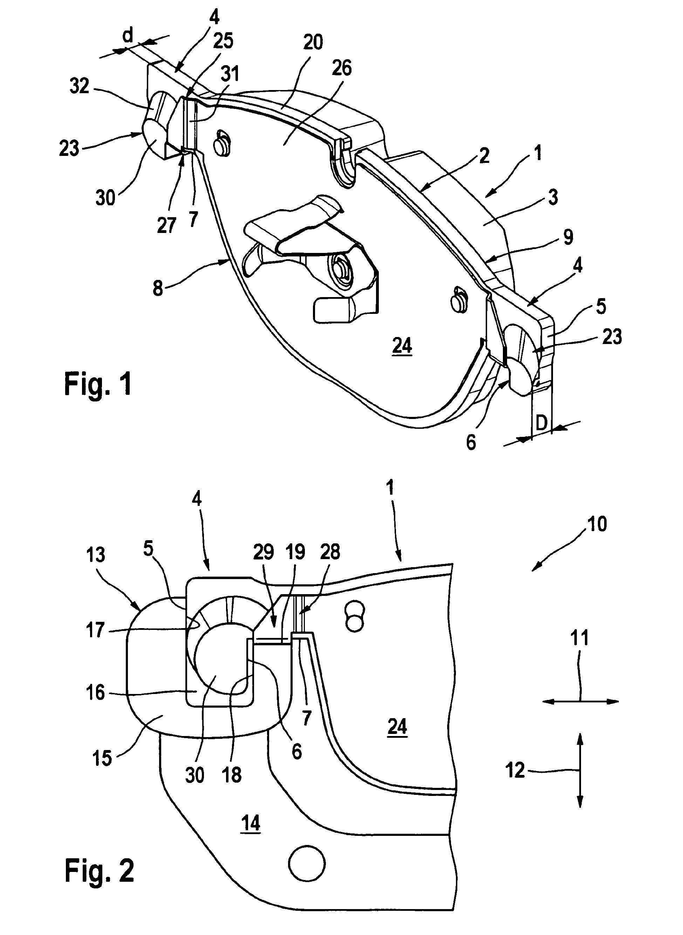

In Fig. 1 ist ein Bremsbelag 1 in persektivischer Ansicht dargestellt. Dieser ist, wie Fig. 2 zeigt, in einem Führungssystem 13 einer Teilbelag-Scheibenbremse 10 mit einem Halter 14 und einem Haltearm 15 mit Führungsschacht 16 geführt.

Der Bremsbelag 1 umfasst eine Rückenplatte 2, eine Dämpfungsplatte 24 und einen Reibbelag 3, welcher auf einer Vorderseite 9 der Rückenplatten 2 durch Press- und Brennvorgänge fest angebracht ist. Der Halter 14 umgreift mit den Halterarmen 15 eine hier nicht dargestellte Bremsscheibe. Diese Bremsscheibe ist drehbar um eine Drehachse gelagert. Bei einem Bremsvorgang wird die Bremsscheibe axial von einem Paar Bremsbeläge 1 beidseitig beaufschlagt. Wie aus Fig. 2 ersichtlich, werden dabei in Umfangsrichtung 11 auf die Bremsbeläge 1 wirkenden Bremskräfte über tangentiale Halteranlageflächen 17,18 in den Führungsschächten 16 in den Halter 14 eingeleitet. Weitere Kräfte, beispielsweise Momenten- und Gewichtskräfte, die, bezüglich auf die Bremsscheibe, in Radialrichtung 12 wirken, sind über radiale Halterabstützflächen 19 in den Halter 14 einleitbar.

Dafür geht ein Rumpfbereich 20 der Rückenplatte 2, der den Reibbelag 3 trägt, in Umfangsrichtung 11 beidseitig in ein hakenförmiges Führungsende 4 über. Dieses greift in den Führungsschacht 16 des Halterarms 15 ein. Es sind auch Bremsbeläge mit nur einem einseitigen hakenförmigen Führungsende 4 vorstellbar, jedoch es wird in dem hier angeführten Ausführungsbeispiel von einem in Umfangsrichtung 11 symmetrischen Bremsbelag 1 ausgegangen. Zur tangentialen Anlage des Bremsbelags 1 an dem Halter in Umfangsrichtung 11 sind an dem Führungsende 4 zwei tangentiale Anlageflächen 5,6 vorgesehen, die bei einem Bremsvorgang in einen kraftübertragenden Kontakt mit den Halteranlageflächen 17,18 treten. Es ist ersichtlich, dass beide Anlageflächen 5,6 an einem Führungsende 4 nicht gleichzeitig in Wirkeingriff treten können. Wenn das in Fig. 2 gezeigte Führungsende 4 bezüglich der Drehrichtung der Bremsscheibe auslaufseitig liegt, so wird dieses Führungsende 4 auf Druck beansprucht, weil die Bremskräfte über die Anlagefläche 5 und die entsprechende Halteranlagefläche 17 abgeleitet werden. Ist die Drehrichtung so gewählt, dass das Führungsende 4 einlaufseitig zur Bremsscheibe liegt, so wird es auf Zug beansprucht und der Kraftfluss führt über das Flächenpaar Anlagefläche 6 des Führungsendes 4 und die entsprechende Halteranlagefläche 18 des Führungsschachtes 16 in den Halter 14. Radial wirksame Kräfte werden über Abstützflächen 7 in dem Führungsende 4 in die radialen Halterabstützflächen 19 des Halters 14 eingetragen.

Zwischen der Abstützfläche 7 und der radialen Halterabstützfläche 19 des Halters 14 ist in einem Laschenbereich 25 der Rückenplatte 2 eine Lasche 27 an der Dämpfungsplatte 24 angeordnet, die sich über einen Biegebereich 28 an einen Rumpfbereich 26 der Dämpfungsplatte 24 anschließt. Eine detaillierte Beschreibung der Ausgestaltung der Dämpfungsplatte ist weiter unten der Beschreibung zu entnehmen.

Diese Lasche 27 dient unter anderem dazu, die axiale Verschiebbarkeit des Bremsbelags 1 in dem Führungsschacht 16 zu erleichtern. Meist ist diese dafür aus einem Werkstoff mit niedriger Gleit- und Haftzahl hergestellt oder entsprechend beschichtet. Um einer Geräuschbildung entgegenzuwirken, muss die Lasche 27 sehr steif mit der Rückenplatte 2 verbunden sein. Geräusche, die als Knarzen bezeichnet werden, entstehen, wenn die Bremse betätigt wird, sich der Bremsbelag 1 im dem Führungsschacht 16 verschiebt und die Lasche 27 dabei einen ständigen Wechsel von Gleiten und Halten in dem Führungsschacht 16 vollführt. Diese sehr hochfrequente alternierende Bewegung überträgt sich in den Halter 14 und verursacht eine Geräuschabstrahlung. Indem die Lasche 27 möglichst steif an die Rückenplatte 2 angebunden ist, werden die Bewegungsmöglichkeiten der Lasche 27 eingeschränkt und die Amplituden der Schwingung minimiert. Die Auflage der Lasche 27 an der Rückenplatte 2 ist auf diese Weise definiert. Mikrorelativbewegungen werden in ihren Amplituden so minimiert, dass sie sich nicht mehr zu geräuschrelevanten Problemen entwickeln.

Insbesondere aus Fig. 1 ist ersichtlich, dass das Führungsende 4 der Rückenplatte 2 eine angeformte Erhebung 23 zur Verstärkung sowie zur gleichzeitigen Vergrößerung der Abstütz- und Anlageflächen 5,6,7 aufweist. Dadurch ist die Bauteilstärke D des Führungsendes 4 zumindest teilweise, insbesondere an der Abstützfläche 7, gegenüber einer Bauteilstärke d des Rumpfbereichs 20 erhöht. Die Erhebung 23 erstreckt sich dabei vorzugsweise in dem Abschnitt des Führungsendes 4, in dem die Abstützfläche 7 in die Anlagefläche 6 übergeht und verläuft im Wesentlichen kreisförmig um den Abschnitt der Abstützfläche 7 und der Anlagefläche 6 herum. Hierbei handelt es sich um einen bei einer Bremsung stark belasteten Abschnitt, an dem nur ein begrenzter tragender Querschnitt der Rückenplatte 2 zur Verfügung steht. Durch die angeformte Erhebung 23 ergibt sich somit auch eine Stärkung dieses festigkeitskritischen Querschnitts. Um den Spannungsfluss in der Rückenplatte 2 beanspruchungsgerecht zu beeinflussen, ist ein Übergang zwischen einer zur Rückenplatte 2 parallele Fläche 30 der Erhebung 23 und einem unverdickten Bereich des Führungsendes 4 als Schräge 32 ausgebildet. Gleichzeitig ist die Erhebung 23 auf einer dem Reibbelag 3 abgewandten Rückseite 8 der Rückenplatte 2 angeformt. Dadurch wird die Qualität der Bremsbelagführung auch bei stark verschlissenem Reibbelag 3 verbessert, da eine stets ausreichend bemessene Abstützfläche 7 zur Verfügung steht.

Vorzugsweise wird die Erhebung 23 durch eine Materialverdrängung einstückig an der Rückenplatte 2 angeformt. Dazu wird fertigungstechnisch günstig eine Verfahrenskombination von Umformen und Feinschneiden bzw. Stanzen angewandt. Dabei wird sowohl die Form der Erhebung 23 festgelegt, als auch die Kontur der Rückenplatte 2 bestimmt. Allgemein wird die Rückenplatte 2 aus einem rohen Ausschnitt aus einem ebenen Blech durch Stanzen oder Feinschneiden gewonnen. Die gewünschte Formgebung der Erhebung 23 wird durch entsprechende Gestaltung einer Negativausnehmung in einem Gegenhalter oder Auswerfer während des Feinschneidens, Umformens oder Vorstanzens festgelegt. Alternativ dazu kann die Erhebung 23 mit Abstützfläche 7 und Anlagefläche 6 während eines Umformvorganges, insbesondere einer Anstauchbearbeitung, ausgebildet werden. Die restliche Kontur der Rückenplatte 2, mit Ausnahme der Abstützfläche 7 und der Anlagefläche 6 wird in einer sich anschließenden Feinschnitt- oder Stanzbearbeitung festgelegt. Die typische Bauteilstärke D der Erhebung 23 liegt bei etwa der 1,1- bis 1,5-fachen Bauteilstärke d des Rumpfbereichs 20 der Rückenplatte 2.

Bekannte Dämpfungsplatten für Bremsbeläge 1 mit den beschriebenen Erhebungen 23 weisen mindestens ein tangentiales Bördelteil auf, welches eine tangentiale Seitenfläche der Rückenplatte umgreift und das in die Lasche übergeht. Damit werden die Erhebungen 23 von der Dämpfungsplatte ausgespart. Diese Ausgestaltung der Dämpfungsplatte ist jedoch aufwendig und insbesondere in Hinblick auf das Handling und die Festigkeit der Dämpfungsplatte nachteilig.

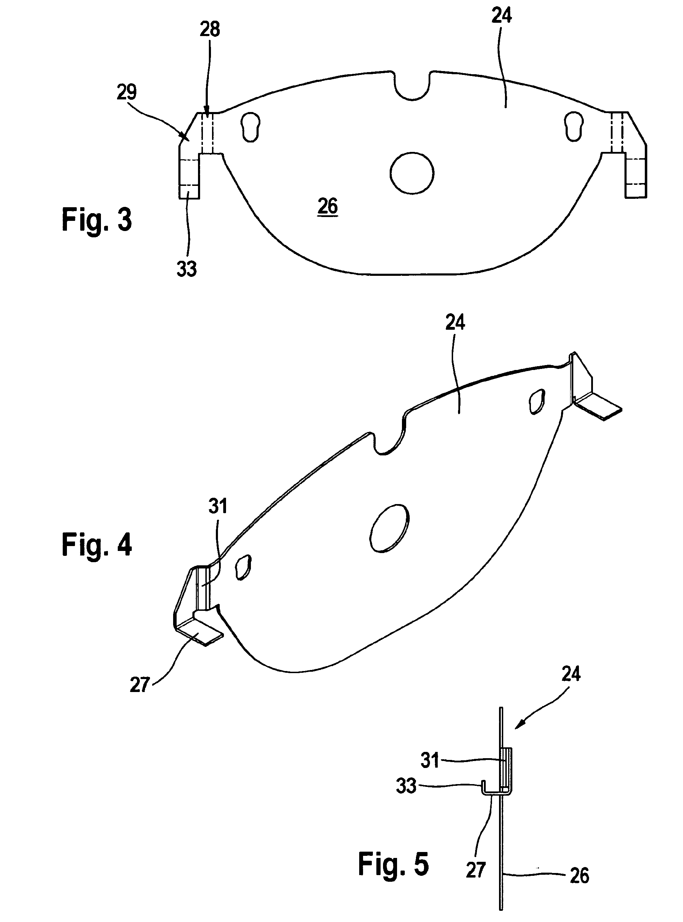

Diese Nachteile werden gemäß der Erfindung vermieden, wie aus der nachfolgenden Beschreibung hervorgeht. Hierzu zeigt Fig. 3 einen ungebogenen Rohschnitt der Dämpfungsplatte 24, welche in den Fig. 1 und 2 dargestellt ist. Der Fig. 4 ist eine perspektivische Ansicht der Dämpfungsplatte 24 nach einem Biegevorgang zu entnehmen. Ferner zeigt Fig. 5 eine Seitenansicht der Dämpfungsplatte 24 gemäß Fig. 3 und 4 nach dem Biegen.

Wie insbesondere den Fig. 1,4 und 5 zu entnehmen ist, ist die Dämpfungsplatte 24 im Rumpfbereich 20 der Rückenplatte 2 relativ zum Laschenbereich 25 axial rückversetzt vorgesehen. An den bereits beschriebenen Rumpfbereich 26 der Dämpfungsplatte 24 schließt sich der Biegebereich 28 an, welcher nach einem Biegevorgang der Dämpfungsplatte 24 als eine in Bezug auf den Rumpfbereich 26 schräge Fläche ausgebildet ist. Dieser Biegebereich 28 geht in einen Laschenbereich 29 über, in welchem die Lasche 27 angeordnet ist. Durch diese Ausgestaltung der Dämpfungsplatte 24 ergibt sich eine für die Festigkeit besonders optimierte Form.

Ein aus Fig. 5 ersichtlicher Teilbereich 33 der Lasche 27 wird bei der Herstellung derart umgebogen, dass dieser nach der Montage der Dämpfungsplatte 24 an der Rückenplatte 2 an der Vorderseite 9 der Rückenplatte 2 im Laschenbereich 25 unter Vorspannung anliegt. Es wird hierdurch eine feste und steife Anbindung der Dämpfungsplatte 24 an die Rückenplatte 2 erreicht und Mikrobewegungen der Bauteile, welche störende Geräusche verursachen können, werden vermieden.

Gleichzeitig liegt gemäß Fig. 1 der Laschenbereich 29 der Dämpfungsplatte 24 zumindest teilweise an einer zur Rückenplatte 2 parallelen Fläche 30 der Erhebung 23 an, wodurch ebenfalls eine Unterdrückung geräuschbildender Schwingungen erreicht wird.

Ferner ist der Laschenbereich 29 an einer der Lasche 27 gegenüberliegenden Fläche abgeschrägt vorgesehen, um beim Handling störende Ecken zu vermeiden.

Die Herstellung der vorstehend beschriebenen Dämpfungsplatte 24 umfasst folgende Schritte:
- Ausstanzen eines ungebogenen Rohschnitts der Dämpfungsplatte 24 aus einem ebenen Blech,
- Biegen des Biegebereiches 28, welcher sich an den Rumpfbereich 26 anschließt, so dass die Dämpfungsplatte 24 in dem Rumpfbereich 26 relativ zu dem Laschenbereich 29, welcher sich an den Biegebereich 28 anschließt, axial rückversetzt ist und
- Umbiegen der Lasche 27, so dass die umgebogene Lasche 27 an der radialen Abstützfläche 7 des Führungsendes 4 anlegbar ist.

In einem weiteren Biegeschritt wird der Teilbereich 33 der Lasche 27 umgebogen, so dass dieser (der Teilbereich 27) an der Vorderseite 9 der Rückenplatte 2 im Laschenbereich 25 unter Vorspannung anlegbar ist.

### Bezugszeichenliste

| | |
|---|---|
| 1 Bremsbelag | 19 Halterabstützfläche |
| 2 Rückenplatte | 20 Rumpfbereich |
| 3 Reibbelag | 21 |
| 4 Führungsende | 22 |
| 5 Anlagefläche | 23 Erhebung |
| 6 Anlagefläche | 24 Dämpfungsplatte |
| 7 Abstützfläche | 25 Laschenbereich |
| 8 Rückseite | 26 Rumpfbereich |
| 9 Vorderseite | 27 Lasche |
| 10 Teilbelag-Scheibenbremse | 28 Biegebereich |
| 11 Umfangsrichtung | 29 Laschenbereich |
| 12 Radialrichtung | 30 Fläche |
| 13 Führungssystem | 31 Fläche |
| 14 Halter | 32 Schräge |
| 15 Halterarm | 33 Teilbereich |
| 16 Führungsschacht | |
| 17 Halteranlagefläche | D Bauteilstärke |
| 18 Halteranlagefläche | d Bauteilstärke |

## Patentansprüche

1. Bremsbelag (1) für eine Teilbelag-Scheibenbremse (10) mit einer Rückenplatte (2),
- wobei an einer Vorderseite (9) der Rückenplatte (2) ein Reibbelag (3) fest angeordnet ist, und an einer Rückseite (8) eine Dämpfungsplatte (24) vorgesehen ist,
- wobei sich an einen Rumpfbereich (20) der Rückenplatte (2) mindestens ein hakenförmiges Führungsende (4) in Umfangsrichtung anschließt, welches eine Erhebung (23) aufweist, so dass eine Bauteilstärke (D) des Führungsendes (4) gegenüber einer Bauteilstärke (d) des Rumpfbereichs (20) erhöht ist,
- und wobei an dem Führungsende (4) mindestens eine Anlagefläche (6) zur tangentialen Anlage in Umfangsrichtung vorhanden ist,
- und an dem eine Abstützfläche (7) zur radialen Abstützung in einer Radialrichtung vorgesehen ist,
- und wobei die Dämpfungsplatte (24) mindestens eine umgebogene Lasche (27) aufweist, welche in einem Laschenbereich (25) der Rückenplatte (2) an der radialen Abstützfläche (7) anliegt,
**dadurch gekennzeichnet, dass**
- die Dämpfungsplatte (24) im Rumpfbereich (20) der Rückenplatte (2) relativ zum Laschenbereich (25) axial rückversetzt vorgesehen ist.

2. Bremsbelag für eine Teilbelag-Scheibenbremse nach Anspruch 1, **dadurch gekennzeichnet, dass** sich an einen Rumpfbereich (26) der Dämpfungsplatte (24) ein Biegebereich (28) anschließt, welcher in einen Laschenbereich (29) übergeht.

3. Bremsbelag für eine Teilbelag-Scheibenbremse nach Anspruch 2, **dadurch gekennzeichnet, dass** der Laschenbereich (29) der Dämpfungsplatte (24) zumindest teilweise an einer zur Rückenplatte (2) parallelen Fläche (30) der Erhebung (23) anliegt.

4. Bremsbelag für eine Teilbelag-Scheibenbremse nach Anspruch 2 oder 3, **dadurch gekennzeichnet, dass** der Biegebereich (28) nach einem Biegevorgang der Dämpfungsplatte (24) als eine in Bezug auf den Rumpfbereich (26) und den Laschenbereich (29) schräge Fläche (31) ausgebildet ist.

5. Bremsbelag für eine Teilbelag-Scheibenbremse nach Anspruch 4, **dadurch gekennzeichnet, dass** der Laschenbereich (29) an einer der Lasche (27) gegenüberliegenden Fläche abgeschrägt vorgesehen ist.

6. Bremsbelag für eine Teilbelag-Scheibenbremse nach einem der vorangegangenen Ansprüche 1 bis 5, **dadurch gekennzeichnet, dass** ein Teilbereich (33) der Lasche (27) an der Vorderseite (9) der Rückenplatte (2) im Laschenbereich (25) unter Vorspannung anliegt.

7. Verfahren zur Herstellung einer Dämpfungsplatte (24) für einen Bremsbelag (1) nach Anspruch 1, wobei der Bremsbelag (1) eine Rückenplatte (2) und einen Reibbelag (3) umfasst, welcher an einer Vorderseite (9) der Rückenplatte (2) angeordnet ist, wobei sich an einen Rumpfbereich (20) der Rückenplatte (2) mindestens ein hakenförmiges Führungsende (4) in Umfangsrichtung anschließt, welches eine Erhebung (23) aufweist, so dass eine Bauteilstärke (D) des Führungsendes (4) gegenüber einer Bauteilstärke (d) des Rumpfbereichs (20) erhöht ist, und wobei an der Dämpfungsplatte (24) eine Lasche (27) einstückig ausgebildet ist, **gekennzeichnet durch** die Schritte:
- Ausstanzen eines ungebogenen Rohschnitts der Dämpfungsplatte (24) aus einem ebenen Blech,
- Biegen eines Biegebereiches (28), welcher sich an einen Rumpfbereich (26) anschließt, so dass die Dämpfungsplatte (24) in dem Rumpfbereich (26) relativ zu einem Laschenbereich (29), welcher sich an den Biegebereich (28) anschließt, axial rückversetzt ist und
- Umbiegen der Lasche (27), so dass die umgebogene Lasche (27) an einer radialen Abstützfläche (7) des Führungsendes (4) anlegbar ist.

8. Verfahren zur Herstellung einer Dämpfungsplatte (24) für einen Bremsbelag (1) nach Anspruch 7, **dadurch gekennzeichnet, dass** ein Teilbereich (33) der Lasche (27) umgebogen wird, so dass dieser (der Teilbereich (33)) an der Vorderseite (9) der Rückenplatte (2) im Laschenbereich (25) unter Vorspannung anlegbar ist.

## Claims

1. Brake pad (1) for a partially-lined disk brake (10) with a back plate (2),
- a friction lining (3) being arranged fixedly on a front side (9) of the back plate (2) and a damping plate (24) being provided on a rear side (8),
- at least one hook-shaped guide end (4) adjoining a body region (20) of the back plate (2) in the circumferential direction, which guide end (4) has an elevation (23) such that a component thickness (D) of the guide end (4) is increased in relation to a component thickness (d) of the body region (20),
- and at least one abutment face (6) for tangential abutment in a circumferential direction being present on the guide end (4),
- and a support face (7) for radial support in a radial direction being provided thereon,
- and the damping plate (24) having at least one bent-over bracket (27) which rests against the radial support face (7) in a bracket region (25) of the back plate (2),
**characterized in that**
- the damping plate (24) is offset axially to the rear relative to the bracket region (25) in the body region (20) of the back plate (2).

2. Brake pad for a partially-lined disk brake according to Claim 1, **characterized in that** a bending region (28) adjoins a body region (26) of the damping plate (24) and merges into a bracket region (29).

3. Brake pad for a partially-lined disk brake according to Claim 2, **characterized in that** the bracket region (29) of the damping plate (24) rests at least partially against a face (30) of the elevation (23) which is parallel to the back plate (2).

4. Brake pad for a partially-lined disk brake according to Claim 2 or 3, **characterized in that**, after a bending process of the damping plate (24), the bending region (28) is configured as an oblique face (31) in relation to the body region (26) and to the bracket region (29).

5. Brake pad for a partially-lined disk brake according to Claim 4, **characterized in that** the bracket region (29) is provided with an angled corner on a face opposite the bracket (27).

6. Brake pad for a partially-lined disk brake according to any one of the preceding Claims 1 to 5, **characterized in that** a partial region (33) of the bracket (27) rests under preload against the front side (9) of the back plate (2) in the bracket region (25).

7. Method for producing a damping plate (24) for a brake pad (1) according to Claim 1, the brake pad (1) comprising a back plate (2) and a friction lining (3) which is arranged on a front side (9) of the back plate (2), at least one hook-shaped guide end (4) adjoining a body region (20) of the back plate (2) in a circumferential direction, which guide end (4) has an elevation (23) such that a component thickness (D) of the guide end (4) is increased in relation to a component thickness (d) of the body region (20), and a bracket (27) being formed integrally on the damping plate (24), **characterized by** the steps:
- punching of an unbent blank of the damping plate (24) from flat sheet metal,
- bending of a bending region (28) which adjoins a body region (26) so that the damping plate (24) is offset axially to the rear, in the body region (26), relative to a bracket region (29) which adjoins the bending region (28), and
- bending over of the bracket (27) so that the bent-over bracket (27) can be placed against a radial support face (7) of the guide end (4).

8. Method for producing a damping plate (24) for a brake pad (1) according to Claim 7, **characterized in that** a partial region (33) of the bracket (27) is bent over so that it (the partial region (33)) can be placed under preload against the front side (9) of the back plate (2) in the bracket region (25).

## Revendications

1. Garniture (1) pour frein à disque (10) partiellement garni et doté d'une plaque de dos (2),
- une garniture de friction (3) étant disposée fixement sur un côté avant (9) de la plaque de dos (2) et une plaque d'amortissement (24) étant prévue sur un côté dorsal (8),
- au moins une extrémité de guidage (4) en forme de crochet qui présente une saillie (23) telle que l'épaisseur (D) de composant de l'extrémité de guidage (4) soit supérieure à l'épaisseur (d) de composant de la partie de corps (20) se raccordant périphériquement à une partie de corps (20) de la plaque de dos (2),
- au moins une surface de pose (6) destinée à venir se poser tangentiellement dans la direction périphérique étant prévue sur l'extrémité de guidage (4),
- une surface d'appui (7) destinée à assurer un appui dans une direction radiale étant prévue sur la garniture de frein,
- la plaque d'amortissement (24) présentant au moins une patte rabattue (27) qui repose par une partie de patte (25) de la plaque de dos (2) sur la surface radiale d'appui (7),
**caractérisée en ce que**
dans la partie de corps (20) de la plaque de dos (2), la plaque d'amortissement (24) est en retrait axial par rapport à la partie de patte (25).

2. Garniture pour frein à disque partiellement garni selon la revendication 1, **caractérisée en ce qu'**une partie cintrée (28) qui se prolonge en une partie de patte (29) se raccorde à une partie de corps (26) de la plaque d'amortissement (24).

3. Garniture pour frein à disque partiellement garni selon la revendication 2, **caractérisée en ce qu'**au moins une partie de la partie de patte (29) de la plaque d'amortissement (24) repose sur une surface (30), parallèle à la plaque de dos (2), de la saillie (23).

4. Garniture pour frein à disque partiellement garni selon les revendications 2 ou 3, **caractérisée en ce qu'**après une opération de cintrage de la plaque d'amortissement (24), la partie cintrée (28) est configurée sous la forme d'une surface (31) oblique par rapport à la partie de dos (26) et à la partie de patte (29).

5. Garniture pour frein à disque partiellement garni selon la revendication 4, **caractérisée en ce que** la partie de patte (29) est prévue en biseau sur une surface située face à la patte (27).

6. Garniture pour frein à disque partiellement garni selon l'une des revendications 1 à 5 qui précèdent, **caractérisée en ce qu'**au niveau de la patte (25), une partie (33) de la patte (27) repose sous précontrainte contre le côté avant (9) de la plaque de dos (2).

7. Procédé de fabrication d'une plaque d'amortissement (24) pour une garniture de frein (1) selon la revendication 1, la garniture de frein (1) comportant une plaque de dos (2) et une garniture de friction (3) disposée sur un côté avant (9) de la plaque de dos (2), au moins une extrémité de guidage (4) en forme de crochet qui présente une saillie (23) telle que l'épaisseur (D) de composant de l'extrémité de guidage (4) soit supérieure à l'épaisseur (d) de composant de la partie de corps (20) se raccordant périphériquement à une partie de corps (20) de la plaque de dos (2), une patte (27) étant formée d'un seul tenant sur la plaque d'amortissement (24), **caractérisé par** les étapes qui consistent à :
- estamper dans une tôle plane une ébauche non cintrée de la plaque d'amortissement (24),
- cintrer une partie cintrée (28) qui se raccorde à une partie de dos (26) de telle sorte que dans la partie de corps (26), la plaque d'amortissement (24) soit en retrait axial par rapport à une partie de patte (29) qui se raccorde à la partie cintrée (28) et
- cintrer la patte (27) de telle sorte que la patte cintrée (27) puisse venir se placer sur une surface radiale d'appui (7) de l'extrémité de guidage (4).

8. Procédé de fabrication d'une plaque d'amortissement (24) pour une garniture de frein (1) selon la revendication 7, **caractérisé en ce qu'**une partie (33) de la patte (27) est cintrée de telle sorte que cette partie (33) puise venir se placer sous précontrainte contre le côté avant (9) de la plaque de dos (2) dans la partie de patte (25).
